# EUROPÄISCHE PATENTSCHRIFT

(11) **EP 2 852 184 B1**
(45) Veröffentlichungstag und Bekanntmachung des Hinweises auf die Patenterteilung: **06.05.2020**
(21) Anmeldenummer: 14181708.0
(22) Anmeldetag: 21.08.2014
(51) Int. Cl.: H04W 4/00, H04L 29/08, H04W 52/02, G01D 4/00

(54) **Verfahren zur parallelen Inbetriebnahme von Netzknoten eines Funknetzwerks**
Method for parallel commissioning of network nodes of a radio network
Procédé de mise en service parallèle de noeuds de réseau d'un réseau radiophonique

(30) Priorität: 23.09.2013 DE 102013110473
(43) Veröffentlichungstag der Anmeldung: 25.03.2015
(73) Patentinhaber: METRONA Union GmbH, 81379 München (DE)
(72) Erfinder: Seeberg, Axel, 85417 Marzling (DE)
(74) Vertreter: Prinz & Partner mbB

(56) Entgegenhaltungen:
- US-A1- 2007 013 547
- US-A1- 2007 081 508
- MOULY M ET AL: "RADIO RESOURCE MANAGEMENT", 1. Januar 1993 (1993-01-01), GSM SYSTEM FOR MOBILE COMMUNICATIONS, LASSAY-LES-CHATEAUX, EUROPE MEDIA, FR, PAGE(S) 308 - 430, XP000860006, * Absatz [6.1.5.1]; Abbildung 6.14 *
- SHAN LIN ET AL: "ATPC", PROCEEDINGS OF THE 4TH INTERNATIONAL CONFERENCE ON EMBEDDED NETWORKED SENSOR SYSTEMS , SENSYS '06, 1. Januar 2006 (2006-01-01), Seite 223, XP055091599, New York, New York, USA DOI: 10.1145/1182807.1182830
- CORREIA L H A ET AL: "Transmission power control techniques for MAC protocols in wireless sensor networks", NETWORK OPERATIONS AND MANAGEMENT SYMPOSIUM, 2008. NOMS 2008. IEEE, IEEE, PISCATAWAY, NJ, USA, 7. April 2008 (2008-04-07), Seiten 1049-1054, XP031290660, ISBN: 978-1-4244-2065-0

## Beschreibung

Die Erfindung betrifft ein Verfahren zur Inbetriebnahme von Netzknoten eines Funknetzwerks.

Im Rahmen der Funkauslesung von Verbrauchsdaten (Gas, Wasser, Wärme, Strom, etc.) in Liegenschaften müssen die von den dort installierten Datenerfassungsgeräten (Zähler, Heizkostenverteiler, etc.) erfassten Daten an einen Abrechnungsdienstleister übermittelt werden.

Die EP 1 860 830 A1 beschreibt die Installation eines hierarchischen Netzwerkes mit mehreren Sensorknoten, welche Sensormesswerte direkt oder indirekt über Sensorknoten an einen zentralen Netzknoten kommunizieren. Die Sensorknoten werden nacheinander in Betrieb genommen, wobei ein Sensorknoten bei Inbetriebnahme eine anfängliche hierarchische Ebene aufweist und Synchronisations-Informationen gespeichert hat, um mit den in seinem Empfangsgebiet befindlichen Sensorknoten kommunizieren zu können. Ein Sensorknoten bildet temporär einen zentralen Netzknoten. Bei einer Kommunikation zwischen zwei Sensorknoten oder einem Sensorknoten und einem zentralen Netzknoten wird ein Synchronisationstelegramm ausgesendet, mit welchem die hierarchische Ebene des sendenden Knotens an den empfangenden Knoten mitgeteilt wird. Nach einer Kommunikation ändert einer der Sensorknoten seine hierarchische Ebene in Abhängigkeit der hierarchischen Ebene des anderen Sensorknotens.

In der EP 2 439 911 A1 ist ein Verfahren zur Konfiguration eines Netzwerks mit Netzknoten in Form von Datensammlern und/oder Datenerfassungsgeräten zur Übermittlung von Verbrauchsdaten an einen Master-Netzknoten beschrieben. Die Konfiguration umfasst das Ermitteln bidirektionaler Kommunikationsverbindungen zwischen den Netzknoten, in denen die Verbrauchsdaten zwischengespeichert sind. Der Master-Netzknoten holt dabei Informationen über die Kommunikationsverbindungen zwischen einzelnen Netzknoten einschließlich deren Empfangsqualität ein, indem jeder Netzknoten die von ihm direkt empfangbaren Nachbar-Netzknoten und die Empfangsqualität der zugehörigen Kommunikationsverbindung ermittelt und direkt oder indirekt an den Master-Netzknoten weiterleitet.

Aus der US 2012/0036198 A1 ist ein Verfahren betreffend die Selbstorganisation von Sensorknoten in einem drahtlosen Sensornetzwerk bekannt. Das Verfahren beinhaltet die Verteilung bzw. Installation der Sensorknoten in einer Umgebung an vorgegebenen absoluten Positionen, wobei zwei der Sensorknoten sogenannte Ankerknoten darstellen, deren Kennung (ID) und absolute Position bekannt sind. Die Sensorknoten ermitteln ihre Nachbarknoten dadurch, dass sie ausgehend von einem vordefiniert niedrigen Leistungspegel Nachrichten mit inkrementell steigendem Leistungspegel solange aussenden, bis Antworten eintreffen. Die Ankerknoten übernehmen die Rolle von Masterknoten und bauen intern eine Tabelle aller Sensorknoten inklusive der Verbindungen zu ihren Nachbarn im Netz auf.

Die US 2007/0013547 A1 befasst sich mit dem Aufbau eines automatisierten Netzwerksystems zum Auslesen von gemessenen Verbrauchsdaten und mit der Kommunikation der Netzknoten (Datenerfassungsgeräte und Datensammler) einschließlich eines Host-Computers, der ein fester Bestandteil des Netzwerks ist. Der Host-Computer verfügt über eine Funkeinrichtung, die auf eine Arbeitsfrequenz der Netzknoten abgestimmt ist, sodass eine Funkverbindung zwischen dem Host-Computer und den Netzknoten auf der Arbeitsfrequenz hergestellt werden kann, um Daten zwischen den Netzknoten und dem Host-Computer auszutauschen. Die Sendeleistung von Netzknoten, mit der diese im regulären Betrieb des Netzwerks senden sollen, kann individuell eingestellt werden. Falls die Netzknoten beispielsweise sehr nahe zusammen angeordnet sind, wird vorgeschlagen, die Sendeleistung zu reduzieren.

In einem anderen Zusammenhang ist aus der US 2007/0081508 A1 ein Verfahren zur Verbindung von elektronischen Geräten (Netzknoten), wie etwa tragbaren Computern, PDAs, Smartphones, mit einem bestehenden Funknetzwerk bekannt. Mit einem bereits mit dem Funknetzwerk verbundenen Gerät (Konfigurationsgerät), z. B. einem Notebook, mit einer auf eine Arbeitsfrequenz der Netzknoten abgestimmten Funkeinrichtung wird eine Funkverbindung zu dem hinzuzufügenden Netzknoten auf der Arbeitsfrequenz hergestellt. Anschließend werden die Sendeleistungen des Konfigurationsgeräts und des Netzknotens jeweils unter eine Sendeleistung abgesenkt, mit der das Konfigurationsgerät bzw. der Netzknoten im regulären Betrieb sendet. Zwischen dem Netzknoten und dem Konfigurationsgerät werden geheime Daten für die Inbetriebnahme des Netzknotens bei gleichbleibend reduzierter Sendeleistung ausgetauscht.

Die vorliegende Erfindung geht davon aus, dass für die Inbetriebnahme von Netzknoten wenigstens ein Konfigurationsgerät verwendet wird, das jeweils in Funkkontakt mit dem aktuell zu konfigurierenden Netzknoten tritt. Bei der Verwendung solcher Konfigurationsgeräte kann es zu unerwünschten Überkreuz-Funkverbindungen kommen. Diese Gefahr besteht insbesondere bei Netzknoten, die mit einer bidirektional arbeitenden Funksende-/empfangseinrichtung ausgestattet sind, wenn alle Netzknoten auf derselben Funkfrequenz senden und/oder empfangen, da die Identität des jeweiligen Netzknotens erst während der Inbetriebnahme ermittelt bzw. vergeben wird.

Aufgabe der Erfindung ist es, bei einem Funknetzwerk mit Netzknoten, insbesondere in Form von Datensammlern und/oder Datenerfassungsgeräten zur Übermittlung von Verbrauchsdaten, eine zuverlässige parallele Inbetriebnahme der Netzknoten mithilfe eines oder mehrerer Konfigurationsgeräte zu gewährleisten.

Gelöst wird diese Aufgabe durch ein Verfahren mit den Merkmalen des Anspruchs 1. Vorteilhafte und zweckmäßige Ausgestaltungen des erfindungsgemäßen Verfahrens sind in den Unteransprüchen angegeben.

Das erfindungsgemäße Verfahren dient zur parallelen Inbetriebnahme von Netzknoten in Form von Datenerfassungsgeräten und/oder Datensammlern in Form von Datenerfassungsgeräten und/oder Datensammlern eines Funknetzwerks, das zur Funkauslesung von Verbrauchsdaten in einer Liegenschaft, welche von den Datenerfassungsgeräten in Form von Heizkostenverteilern, Gaszählern, Wasserzählern und/oder Wärmemengenzählern erfasst wurden, und zur Übermittlung der Verbrauchsdaten an einen Abrechnungsdienstleister vorgesehen ist, und umfasst folgende Schritte:
- Bereitstellen wenigstens eines mobilen Konfigurationsgeräts mit einer Funkeinrichtung, die auf eine Arbeitsfrequenz der Netzknoten abgestimmt ist;
- Herstellen einer Funkverbindung zwischen dem Konfigurationsgerät und einem Netzknoten auf der Arbeitsfrequenz;
- anschließendes Absenken der Sendeleistung und/oder der Empfangsempfindlichkeit des Netzknotens; und
- Austauschen von Daten zwischen dem Netzknoten und dem Konfigurationsgerät für die Inbetriebnahme des Netzknotens bei gleichbleibend reduzierter Sendeleistung und/oder Empfangsempfindlichkeit des Netzknotens.

Unter der Inbetriebnahme von Netzknoten sollen hier alle Arbeiten verstanden werden, die eine Funkverbindung zwischen dem Netzknoten und dem Konfigurationsgerät erfordern, insbesondere das Konfigurieren eines Netzknotens, das Einstellen von bestimmten Parametern, das Auslesen bestimmter Daten etc.

Die Erfindung beruht auf der Erkenntnis, dass ein Installateur mit einem mobilen Konfigurationsgerät nahe genug an den aktuell in Betrieb zu nehmenden Netzknoten herantreten kann, sodass eine relativ schwache Sendeleistung und/oder Empfangsempfindlichkeit des Netzknotens für den Datenaustausch im Rahmen seiner Inbetriebnahme ausreicht. "Relativ schwach" soll heißen, dass die Sendeleistung bzw. Empfangsempfindlichkeit deutlich unter der Leistung bzw. Empfindlichkeit liegen soll, mit der ein Netzknoten im regulären Betrieb seiner bestimmungsgemäß sendet bzw. empfängt, d. h. Verbrauchsdaten an einen oder mehrere andere Netzknoten übermittelt bzw. Verbrauchsdaten von einem oder mehreren anderen Netzknoten empfängt. Auf diese Weise kann weitestgehend ausgeschlossen werden, dass ein weiter entfernter Netzknoten unerwünscht mit dem Konfigurationsgerät in Funkkontakt tritt. Falls dies schon geschehen ist, wird durch die erfindungsgemäß vorgesehene Absenkung der Sendeleistung und/oder Empfangsempfindlichkeit des weiter entfernten Netzknotens sichergestellt, dass diese unerwünschte Funkverbindung getrennt wird und das Konfigurationsgerät anschließend für die erwünschte Funkverbindung mit dem näheren Netzknoten zur Verfügung steht.

Im Nahbereich ist grundsätzlich eine an die reduzierte Sendeleistung und/oder Empfangsempfindlichkeit des Netzknotens angepasste Sendeleistung und/oder Empfangsempfindlichkeit des Konfigurationsgeräts ausreichend, um den Datenaustausch im Rahmen der Inbetriebnahme des Netzknotens durchzuführen. Es ist daher sinnvoll, nach dem Herstellen der Funkverbindung zwischen dem Konfigurationsgerät und dem Netzknoten auch die Sendeleistung und/oder die Empfangsempfindlichkeit des Konfigurationsgeräts abzusenken, wenn dieses zuvor mit höherer Sendeleistung und/oder Empfangsempfindlichkeit nach einem Netzknoten "gesucht" hat.

Die Sendeleistung und Empfangsempfindlichkeit des Netzknotens und des Konfigurationsgeräts soll nach Beendigung der Inbetriebnahme des Netzknotens wieder das ursprüngliche Niveau haben. Es kann jedoch vorteilhaft sein, die Sendeleistung und/oder die Empfangsempfindlichkeit schon vorher wieder zu erhöhen. Sobald dem Konfigurationsgerät nämlich während der Inbetriebnahme eine dem Netzknoten zugewiesene Kennung bekannt ist, kann das Konfigurationsgerät aufgrund dieser Kenntnis eine erwünschte Funkverbindung gezielt aufrechterhalten bzw. eine unerwünschte Funkverbindung gezielt unterbrechen. Da ab diesem Zeitpunkt Verwechslungen also ausgeschlossen werden können, hilft eine Erhöhung der Sendeleistung und/oder der Empfangsempfindlichkeit, die Stabilität der erwünschten Funkverbindung zu verbessern. Das bedeutet, dass es dann unerheblich ist, wenn sich der Installateur etwas vom Netzknoten entfernt.

Das erfindungsgemäße Verfahren wird in einem Funknetzwerk eingesetzt, das zum Auslesen und Übermitteln von Verbrauchsdaten in einer Liegenschaft vorgesehen ist. Dementsprechend sind wenigstens einige der Netzknoten Heizkostenverteiler, Gaszähler, Wasserzähler und/oder Wärmemengenzähler.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 schematisch ein erwünschtes Konfigurationsszenario bei der Inbetriebnahme von Netzknoten eines Funknetzwerks in Einklang mit dem erfindungsgemäßen Verfahren; und
- Figur 2 schematisch ein unerwünschtes Konfigurationsszenario bei der Inbetriebnahme von Netzknoten eines Funknetzwerks.

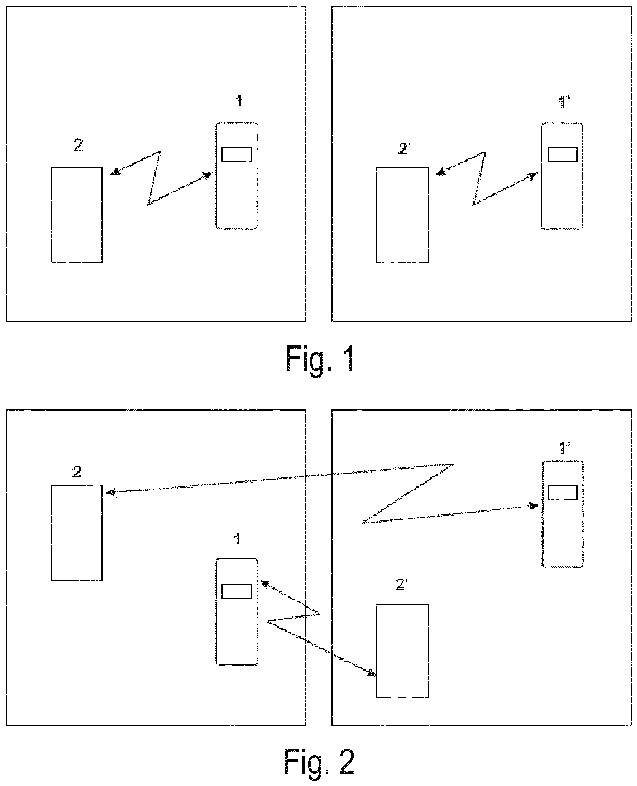

In Figur 1 sind beispielhaft zwei Netzknoten 1, 1' dargestellt, die Teil eines Funknetzwerks sind. Bei den Netzknoten 1, 1' handelt es sich um Datenerfassungsgeräte und/oder Datensammler in einer Liegenschaft, die gespeicherte Verbrauchsdaten an einen Master-Netzknoten übermitteln, von wo diese dann direkt oder über weitere Zwischenstationen an ein Rechenzentrum eines Abrechnungsdienstleisters übertragen werden. Als Datenerfassungsgeräte kommen insbesondere Heizkostenverteiler, Gas-, Wasser- und/oder Wärmemengenzähler in Betracht.

Die Inbetriebnahme der Netzknoten1, 1', d. h. deren Eingliederung in das Funknetzwerk, erfolgt berührungslos per Funk. Hierzu ist ein mobiles Konfigurationsgerät 2 mit einer Funkeinrichtung vorgesehen, die auf einer Arbeitsfrequenz der Netzknoten 1, 1' in Funkkontakt mit den Netzknoten 1, 1' treten kann. Über das Konfigurationsgerät 2 können neben der eigentlichen Aktivierung der Netzknoten 1, 1' auch bestimmte Einstellungen und Abfragen an den Netzknoten 1, 1' vorgenommen werden. Das Konfigurationsgerät 2 selbst kann wiederum Daten an einen Handcomputer oder ein anderes Datenverarbeitungsgerät (nicht dargestellt) weiterleiten, beispielsweise über eine Bluetooth- oder USB-Schnittstelle.

Figur 1 zeigt schematisch eine wunschgemäße parallele Inbetriebnahme der Netzknoten 1, 1': Das Konfigurationsgerät 2 tritt mit demjenigen Netzknoten 1 in Funkkontakt, welchen der Installateur gerade in Betrieb nehmen möchte (linke Bildhälfte). Das gleiche Szenario ist in der rechten Bildhälfte dargestellt: Das Konfigurationsgerät 2' tritt wunschgemäß mit dem Netzknoten 1' in Funkkontakt. Bei den Konfigurationsgeräten 2, 2' kann es sich dabei um ein und dasselbe Gerät handeln, wenn z. B. ein Installateur nacheinander mehrere Netzknoten in Betrieb nimmt, oder es können zwei verschiedene Konfigurationsgeräte sein, wenn z. B. mehrere Installateure gleichzeitig mehrere Netzknoten 1, 1' in Betrieb nehmen.

Figur 2 zeigt schematisch eine nicht-wunschgemäße Inbetriebnahme der Netzknoten 1, 1': Das Konfigurationsgerät 2 tritt hier nicht mit demjenigen Netzknoten 1 in Funkkontakt, welchen der Installateur gerade in Betrieb nehmen möchte (linke Bildhälfte), sondern mit einem anderen, weiter entfernten Netzknoten 1' (rechte Bildhälfte). Gleiches gilt für das Konfigurationsgerät 2', das eigentlich mit dem Netzknoten 1' kommunizieren soll, stattdessen aber in Funkkontakt mit dem Netzknoten 1 steht. Solche unerwünschten Überkreuz-Funkverbindungen können auftreten, wenn die Netzknoten 1, 1' des Funknetzwerks auf derselben Funkfrequenz senden bzw. empfangen und noch keine eindeutige Kennung (ID) vergeben wurde oder bevor eine solche Kennung vom verbundenen Konfigurationsgerät 2 bzw. 2' ermittelt wurde.

Um solche unerwünschten Funkverbindungen oder -störungen durch andere, zur selben Zeit aktive oder aktivierte Netzknoten 1, 1' bzw. Konfigurationsgeräte 2, 2' weitestgehend zu vermeiden, wird, sobald eine Funkverbindung zwischen einem Netzknoten 1 oder 1' und einem Konfigurationsgerät 2 oder 2' hergestellt ist, die Sendeleistung und/oder die Empfangsempfindlichkeit des betroffenen Netzknotens 1 bzw. 1' deutlich abgesenkt. Optional kann in diesem Fall auch die Sendeleistung und/oder die Empfangsempfindlichkeit des betroffenen Konfigurationsgeräts 2 bzw. 2' entsprechend abgesenkt werden.

Nachfolgend wird der Einfachheit halber beispielhaft davon ausgegangen, dass zwischen dem Netzknoten 1 und dem Konfigurationsgerät 2 eine Funkverbindung aufgebaut wurde.

Die reduzierte Sendeleistung und/oder Empfangsempfindlichkeit ist so gewählt, dass die Funkverbindung im Nahbereich stabil und zuverlässig genug für die Einstellungen am Netzknoten 1 oder den sonstigen vorgesehenen Datenaustausch ist, jedoch Überkreuz-Funkverbindungen nach Figur 2 vermieden werden. Erst nach Beendigung der Arbeiten, wenn also die Funkverbindung zwischen dem Netzknoten 1 und dem Konfigurationsgerät 2 beendet ist, arbeiten der Netzknoten 1 und ggf. auch das Konfigurationsgerät 2 beim nächsten Einsatz wieder mit der normalen Sendeleistung und Empfangsempfindlichkeit, zumindest solange, bis wieder eine Funkverbindung zwischen dem Netzknoten 1 und einem Konfigurationsgerät hergestellt ist.

Alternativ kann die Sendeleistung und/oder die Empfangsempfindlichkeit auch schon früher erhöht werden, nämlich sobald dem Konfigurationsgerät 2 eine dem Netzknoten 1 zugewiesene eindeutige Kennung bekannt ist.

Das Verfahren stellt sicher, dass ausschließlich Funkverbindungen nach Art der Figur 1 hergestellt werden und auch für die Dauer der Arbeiten bestehen bleiben. Unbeabsichtigt hergestellte Funkverbindungen werden dagegen durch die bewusste Leistungsabsenkung automatisch getrennt.

## Patentansprüche

1. Verfahren zur parallelen Inbetriebnahme von Netzknoten (1, 1') in Form von Datenerfassungsgeräten und/oder Datensammlern eines Funknetzwerks, das zur Funkauslesung von Verbrauchsdaten in einer Liegenschaft, welche von den Datenerfassungsgeräten in Form von Heizkostenverteilern, Gaszählern, Wasserzählern und/oder Wärmemengenzählern erfasst wurden, und zur Übermittlung der Verbrauchsdaten an einen Abrechnungsdienstleister vorgesehen ist, mit folgenden Schritten:
- Bereitstellen wenigstens eines mobilen Konfigurationsgeräts (2, 2') mit einer Funkeinrichtung, die auf eine Arbeitsfrequenz der Netzknoten (1, 1') abgestimmt ist;
- Herstellen einer Funkverbindung zwischen dem Konfigurationsgerät (2, 2') und einem Netzknoten (1, 1') auf der Arbeitsfrequenz;
- anschließendes Absenken der Sendeleistung und/oder der Empfangsempfindlichkeit des Netzknotens (1, 1') unter die Sendeleistung bzw. Empfangsempfindlichkeit, mit der der Netzknoten im regulären Betrieb sendet bzw. empfängt; und
- Austauschen von Daten zwischen dem Netzknoten (1, 1') und dem Konfigurationsgerät (2, 2') für die Inbetriebnahme des Netzknotens (1, 1') bei gleichbleibend reduzierter Sendeleistung und/oder Empfangsempfindlichkeit des Netzknotens (1, 1').

2. Verfahren nach Anspruch 1, **dadurch gekennzeichnet, dass** nach dem Herstellen der Funkverbindung zwischen dem Konfigurationsgerät (2, 2') und dem Netzknoten (1, 1') auch die Sendeleistung und/oder die Empfangsempfindlichkeit des Konfigurationsgeräts (2, 2') abgesenkt wird.

3. Verfahren nach Anspruch 1 oder 2, **dadurch gekennzeichnet, dass** die Sendeleistung und/oder die Empfangsempfindlichkeit wieder erhöht wird, sobald dem Konfigurationsgerät (2, 2') eine dem Netzknoten (1, 1') zugewiesene Kennung bekannt ist.

4. Verfahren nach einem der vorhergehenden Ansprüche, **dadurch gekennzeichnet, dass** wenigstens einige der Netzknoten (1, 1') Heizkostenverteiler, Gaszähler, Wasserzähler und/oder Wärmemengenzähler sind.

## Claims

1. A method for the parallel putting into operation of network nodes (1, 1') in the form of data acquisition devices and/or data collectors of a radio network which is provided for radio readout of consumption data in a real property, which were acquired by the data acquisition devices in the form of heat cost allocators, gas meters, water meters and/or heat meters, and for transmitting the consumption data to a billing service provider, comprising the following steps:
- providing at least one mobile configuration device (2, 2') having a radio installation which is tuned to a working frequency of the network nodes (1, 1');
- establishing a radio communication between the configuration device (2, 2') and a network node (1, 1') on the working frequency;
- followed by lowering of the transmission power and/or the receiving sensitivity of the network node (1, 1') below the transmission power and/or the receiving sensitivity with which the network node transmits or receives in regular operation; and
- exchanging data between the network node (1, 1') and the configuration device (2, 2') for the putting into operation of the network node (1, 1') while the transmission power and/or the receiving sensitivity of the network node (1, 1') remain(s) consistently reduced.

2. The method according to claim 1, **characterized in that** after establishing the radio communication between the configuration device (2, 2') and the network node (1, 1'), the transmission power and/or the receiving sensitivity of the configuration device (2, 2') is/are also lowered.

3. The method according to claim 1 or 2, **characterized in that** the transmission power and/or the receiving sensitivity is/are increased again as soon as an identifier assigned to the network node (1, 1') is known to the configuration device (2, 2').

4. The method according to any of the preceding claims, **characterized in that** at least some of the network nodes (1, 1') are heat cost allocators, gas meters, water meters and/or heat meters.

## Revendications

1. Procédé de mise en œuvre parallèle de nœuds de réseau (1, 1') sous forme de dispositifs de saisie de données et/ou de collecteurs de données d'un réseau radio qui est prévu pour la lecture par radio de données de consommation dans un immeuble, lesquelles ont été saisies par les dispositifs de saisie de données sous forme de répartiteurs de frais de chauffage, de compteurs à gaz, de compteurs d'eau et/ou de compteurs de chaleur, et pour la transmission des données de consommation à un prestataire de services de facturation, comprenant les étapes suivantes :
- fournir au moins un dispositif de configuration mobile (2, 2') qui présente un moyen radio accordé à une fréquence de fonctionnement des nœuds de réseau (1, 1'),
- établir une liaison radio entre le dispositif de configuration (2, 2') et un nœud de réseau (1, 1') sur la fréquence de fonctionnement ;
- ensuite baisser la puissance d'émission et/ou la sensibilité de réception du nœud de réseau (1, 1') au-dessous de la puissance d'émission et de la sensibilité de réception, respectivement, au niveau de laquelle le nœud de réseau émet et reçoit, respectivement, lors d'un fonctionnement réglementaire ; et
- échanger des données entre le nœud de réseau (1, 1') et le dispositif de configuration (2, 2') pour la mise en œuvre du nœud de réseau (1, 1') à une puissance d'émission et/ou une sensibilité de réception du nœud de réseau (1, 1') constamment réduite.

2. Procédé selon la revendication 1, **caractérisé en ce qu'**après l'établissement de la liaison radio entre le dispositif de configuration (2, 2') et le nœud de réseau (1, 1'), la puissance d'émission et/ou la sensibilité de réception du dispositif de configuration (2, 2') est/sont également baissée(s).

3. Procédé selon la revendication 1 ou 2, **caractérisé en ce que** la puissance d'émission et/ou la sensibilité de réception est/sont de nouveau augmentée(s) dès que le dispositif de configuration (2, 2') connaît une identification associée au nœud de réseau (1, 1').

4. Procédé selon l'une des revendications précédentes, **caractérisé en ce qu'**au moins certains des nœuds de réseau (1, 1') sont des répartiteurs de frais de chauffage, des compteurs à gaz, des compteurs d'eau et/ou des compteurs de chaleur.
